# EUROPEAN PATENT SPECIFICATION

(11) **EP 1 538 460 B1**
(45) Date of publication and mention of the grant of the patent: **26.12.2012**
(21) Application number: 04026776.7
(22) Date of filing: 11.11.2004
(51) Int. Cl.: G01T 1/24, G01T 1/17, G01T 3/08, G01T 1/29

(54) **A pixel detector for incident particles and/or photons having improved testing capabilities and a method for testing a pixel detector**
Pixeldetektor für Teilchen und / oder Photonen mit verbesserten Testmöglichkeiten und Verfahren zum Testen eines Pixeldetektors
Détecteur à pixels pour des particules et / ou des photons ayant des facultés de test améliorées et procédé pour tester un détecteur à pixels

(30) Priority: 04.12.2003 EP 03027914
(43) Date of publication of application: 08.06.2005
(73) Proprietor: Dectris AG, 5400 Baden (CH)
(72) Inventor: Horisberger, Roland, Dr., 5416 Kirchdorf (CH)
(74) Representative: Fischer, Michael

(56) References cited:
- EP-A- 0 523 784
- US-A- 4 047 034
- US-A- 4 687 622
- US-B1- 6 404 851

## Description

The invention relates to a pixel detector for incident particle and/or photon radiation. Further, the invention relates to a method for testing a pixel detector.

Pixel detectors are used in a broad and huge field of versatile applications in modern technologies for various technical and/or scientific purposes. As for an example, various application are known in the medical field which requires x-ray and/or all type of particle detection with high time and/or spatial resolution. Even in material sciences, the same approach as for medical applications apply for applications like material testing, biomolecule and/or crystal investigations. Additionally, the application of thermal and cold neutrons for imaging purposes has a tradition since strong neutron sources became available. The application of this technique is mainly for non-destructive testing, complementary to standard x-ray methods. Exploiting the much higher sensitivity for light nuclides and the good penetrability for heavy metals, neutron radiography methods have been applied in many fields of industrial applications and of material research, too.

X-ray diffraction patterns are useful in the analysis of molecular structures, such as protein and virus molecules, and require photon counting imaging devices. Especially, protein and virus crystallography imposes stringent requirements on x-ray detectors, particularly where the x-ray source is high flux synchrotron radiation that enables an experiment to be done rapidly. Furthermore, an important and developing field is time-resolved diffraction experiments using synchrotron radiation, such as crystallography and/or powder diffraction analysis. Monitoring a time-dependent reaction in a sample, i.e. a crystal or a powder, can elucidate the time-dependent crystal/molecular changes that occur in a chemical reaction as well. High time resolution speed is often critical in such monitoring.

In the past few years, a strong development has taken place towards digital imaging systems for all kind of radiation, enabling much higher sensitivity, good linearity and the opportunity for detailed time and spatial quantification on the basis of the obtained numerical information. The changed options in the detector technology in respect to spatial and time resolution made such applications possible like neutron tomography, real-time imaging and phase enhanced contrast imaging. Presently, radiation sensitive imaging plates and special CCD cameras in connection with a scintillator are in use for this purpose. Flat panel detectors based on the amorphous silicon technology starts to be introduced into the field of application.

A pixel detector comprising a matrix array of photodiodes and read-out data lines connected via read-out switches to the pixel detectors is described in the patent US 6 404 851. In this system, signals appearing on the data lines via capacitive coupling of the photodiodes to the data lines are used for automatic exposure control.

The patent application EP 0 523 784 A1 describes a similar detector with means allowing to test the connection between switches and photosensitive elements.

An advanced semiconductor detector of either flat or spherical shape has been proposed in the international patent application PCT/EP03/08886. The photon-counting imaging device for single x-ray counting comprises:
a) a layer of photosensitive material;
b) a source of bias potential;
c) a source of threshold voltage supply;
d) an NxM array of photodetector diodes arranged in said layer of photosensitive material; each of said photodetector diodes having a bias potential interface and a diode output interface, said bias potential interface of each photodetector diode being connected to said bias potential;
e) an NxM array of high gain, low noise readout unit cells, one readout unit cell for each photodetector diode;
f) each readout unit cell comprising an input interface connected to said diode output interface, a high-gain voltage amplifying means comprising a comparator unit, a digital counter unit, comprising a digital counter, and a digital counter output interface connected in series, each digital counter unit counting an output signal of the comparator unit; said output signal is proportional to a number of electron/hole pairs generated by a photon in the respective photodetector diode,
g) a multiplexing means comprising a row select and a column select allowing to access each of the readout cell units, i.e. to read out the digital data as actually stored in the digital counter to the digital counter output interface;
h) each digital counter output interface connected to an output bus
i) said output bus being connected to a data processing means controlling the multiplexing means.

According the these measures, this photon counting imaging device is created having an architecture of the readout circuitry that allows to be tolerant with respect to a local defect of a detector diode and/or readout unit cell and that allow to control and redesign the program and/or the status of each detector diode and/or readout unit cell. An advantageous architecture comprises the diode output interface of the photodetector diodes and the input interface of the readout unit cell to be connected to each other by bump bonding, preferably using indium bumps for the bump bonding. This measure facilitates the manufacturing of a photodetector diode and readout unit cell assembly at considerably low temperatures. Using the indium bumps leads in detail to soldering temperatures lower than 100°C that not jeopardizes the fine structures of the complete assembly.

Regardless this enhanced technology of architecture and manufacturing the pixel detector may suffer from the drawback that cell testing capabilities are limited to the complete detector chain. By illuminating the active detector surface in a test mode different drawbacks are becoming apparent. On the one hand side leads the overall illumination with suitable radiation to a collective activation of all pixels which generates tremendous data to be analysed for deficiencies of a distinct pixel and its electronic data flow. On the other hand the yet proposed pixel detector is restricted to a check of the complete detector chain. That means an evaluation or testing step does only reveal whether a distinct pixel fails in function or not. Unfortunately, it is impossible to distinguish whether the semiconductor diode, the bonding or the readout unit cell and its electronic circuitry failed in function.

For the reasons given above, it is desirable to create a pixel detector having enhanced capabilities for failure detection of a distinct pixel. Additionally, it would be desirable to create a method for testing a pixel detector which avoids the afore-mentioned drawbacks.

These aims are achieved according to the invention with respect to the detector by a pixel detector for particle and/or photon radiation, comprising:
a) a conversion layer of a conversion material sensitive to said particle and/or photon radiation;
b) an NxM array of detector diodes arranged in said conversion layer; each of said detector diodes having a bias potential interface and a diode output interface;
c) an electronic circuitry layer comprising a NxM array of high gain, low noise readout unit cells, one readout unit cell for each detector diode, and a plurality of circuit traces;
d) said plurality of circuit traces comprises a plurality of cell testing traces (28) for at least a part of said readout unit cells (18);
e) means for generating a testing signal and for directing this signal to the cell testing traces of distinct predetermined readout unit cells; and
f) said cell testing traces (28) are disposed at least partially relative to the detector diodes (2) in order to allow a test signal on a distinct cell testing trace (28) to crosstalk into the respective detector diode (2).

These features improve an existing pixel detector in a way that the proper function of a pixel can be checked from component to component in the detector chain via a trial and error principle. The disposal of the cell testing trace can be therefore resolved in versatile manners in order to fulfill the requirement of crosstalk. The signal generated in the detector diode by crosstalk does not require any external illumination of the respective detector diode to its generation and failure of an output signal at the end of the data processing chain in the readout unit cell indicates the malfunction of either the readout unit cell or the conducting path from the diode output interface to the readout unit cell input interface. The function of the readout unit cell can be checked individually by providing a signal via a calibration input to the entrance of the amplifier means. To allow control and access to each of the readout unit cells and/or detector diodes data processing means are provided being connected via the multiplexer means to said array of readout unit cells. Therefore, two independent shift register of the multiplexing means can access the circuitry of one pixel by electing the respective pixel via row and column select. To interact with the data processing means each readout unit cell comprises an AND-gate having as inputs the row select and the column select of the multiplexing means. If both inputs are high the AND-gate is set high and direct access to the readout unit cell is established.

Very simple efforts to design a proper relationship between the detector diode and the cell testing trace have to be undertaken when the cell testing traces having a crosstalk section, each crosstalk section is disposed at least partially on the surface of the electronic circuitry layer. Of course, the crosstalk section can be insulated electrically that nonwithstanding allows electro-magnetical coupling. Taken advantage of the metallic properties of the diode output interface it might be suitable to dispose said crosstalk section at least partially opposite to said diode output interface. The signal generated by crosstalk is therefore induced directly at the diode output interface and is present via the bump bonds at the input interface of the readout unit cells.

In order to create a simple and straight-forward architecture of the data processing, said test signal may be provided by a data processing means; said data processing means being connected via a multiplexer means to said array of readout unit cells allowing to control each cell testing trace of the respective readout unit cell. Accordingly, the architecture may deliver further skills for data processing insofar as the data processing means may control via the multiplexing means one or more of the following functions:
a) programming of the readout unit cell;
b) readout of the data in the readout unit cell;
c) calibration of the readout unit cell, preferably a high gain voltage amplifier means;
d) analyzing the analog signal in the high gain voltage amplifier means for the purpose of diagnosis; and
e) setting a lower and/or an upper threshold to a threshold unit comprised in each readout unit cell.

These measures now in detail explains the advantages derivable from the afore-mentioned multiplexing means that allow the direct access to each readout unit cell. The calibration in the regard is considered to be able to calibrate the bias of each detector diode. Another calibration can be achieve by the afore-mentioned adjustment of the threshold voltage by the threshold voltage correction supply. For evaluating the status of the detector diode and/or the analog part of the readout unit cell circuitry in detail the analysis of the analog signal processed with the high gain voltage amplifier means is very helpful and could only be achieved by the ability to address a distinct detector pixel using two independent row and coloumn address registers of the multiplexing means.

Typically, a semiconductor material might be used for the conversion layer. An appropriate architecture of a detector diode in this conversion layer may have a doped semiconductor p⁺, n⁺, n⁺⁺ trespassing section. The material choosen for the detector diode depends on the desired bandgap energy required to generate a sufficient number of electron hole pairs as conversion product of an incident particle and/or photon. Suitable materials are undoped amorphous silicon having band gap of 1.12 eV and a bundle of IV-IV compounds and III-V compounds (indium and gallium salts, like gallium arsenide or indium antimonide).

In a convincing simple manner, said crosstalk may be achieved by capacitive coupling. Therefore, an air gap may be disposed between said crosstalk section of the cell testing traces and the detector diode, preferably the diode output interface of the detector diode. It has to be mentioned that the gap between the crosstalk section and the detector diode may be filled with any other suitable insulating material like PE or any type of ceramic insulating material.

With respect to the afore-mentioned method these intended aims are achieved according to the invention by a method for testing a pixel detector having a number of detector diodes disposed in a conversion layer and a number of readout unit cells disposed in an electronic circuitry layer, comprising:
a) generating a cell testing signal;
b) forwarding said cell testing signal to a cell testing trace disposed in said electronic circuitry layer;
c) allowing a crosstalk of the cell testing signal into the respective detector diode in order generate a crosstalk signal;
d) amplifying the crosstalk signal gained from the respective detector diode in the respective readout unit cell; and
e) evaluating the amplyfied crosstalk signal in response to the cell testing signal.

This method allows to check the function of each pixel without prior illumination of the respective detector diode with the respective particle and/or photon irradiation. Especially, this method allows to discriminate the source of a possible malfunction of the electronic signal processing chain or the electrical contact between the output of the detector diode and the input of the readout unit cell.

These and other features of the present invention can be best understood from the following specification and drawings, the following of which is a brief description. Thereby showing in:
- Figure 1: a schematic view of a detector diode;
- Figure 2: a schematic view of a part of a sensor module comprising an array of detector diodes as one is shown in Figure 1;
- Figure 3: a schematic view on the block diagram of a readout unit cell;
- Figure 4: a schematic cross sectional view of a detector pixel comprising a detector diode and a readout unit cell; and

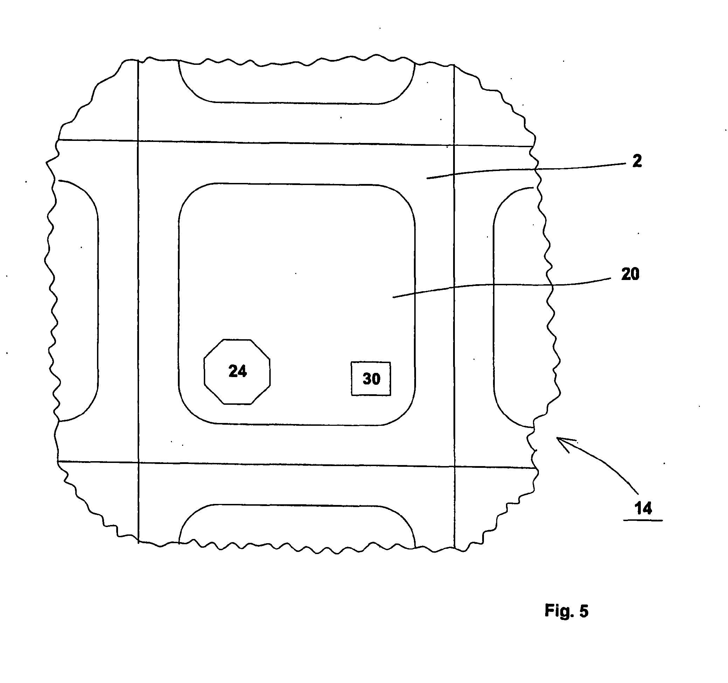

- Figur 5: a schematic sectional view on a detector pixel.

In the following detailed description a conversion layer and a conversion material is understood in a sense that an incident particle and/or photon causes an number of charged particles in this conversion layer, such as electron hole pairs in a semiconductor layer, under at least partially absorbing the incident particle and/or radiation.

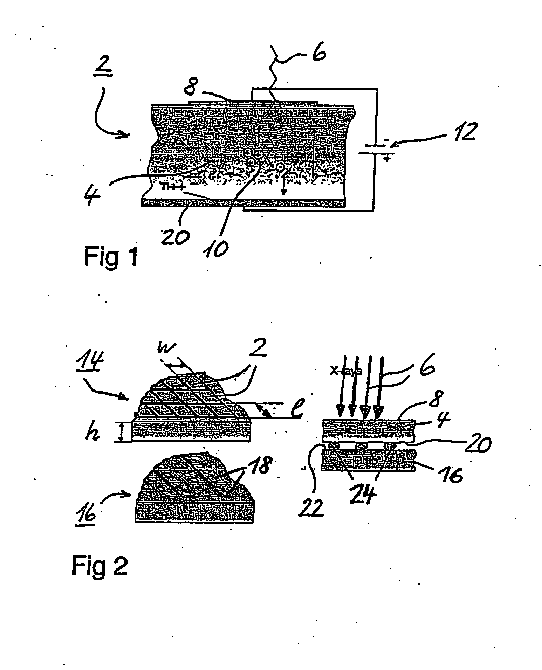

Figure 1 illustrates schematically the architecture of a detector diode 2 having as a conversion layer a doped semiconductor p⁺, n⁺, n⁺⁺ trespassing section 4. The material choosen for the photodetector diode 2 depends on the desired bandgap energy required to generate a sufficient number of electron hole pairs. Suitable materials are undoped amorphous silicon having band gap of 1.12 eV and a bundle of IV-IV compounds and III-V compounds (indium and gallium salts, like gallium arsenide or indium antimonide).

An incident particle and/or photon 6 is at least partially absorbed (with respect to its initial energy) in this conversion layer 4. At least almost the complete absorbed energy of the incident particle and/or photon 6 causes in the doped semiconductor p⁺, n⁺, n⁺⁺ trespassing section 4 a respective number of electron hole pairs 10 in a distinct detector diode 2. In the drawings, this number of electron hole pairs is exemplarily shown by a few electron-hole pairs 10 being divided by the electrical field generated by a source of bias potential 12 via interface 8 and 20.

Figure 2 shows a schematical view of a two-dimensional pixel detector 14. As an example, this pixel detector 14 comprises a plurality of detector diodes 2 arranged in an array of 22 rows and 32 columns. The detector diodes 2 have a length 1 and a width w of about 200 µm and a height of about 300 µm. Below the plane of these photodetector diodes 2 an electronic circuitry layer 16 having a corresponding number of readout unit cells 18 is arranged for collecting the charge from the electron hole pairs 10 generated in the respective detector diodes 2. The electrical conjunction between a diode output interface 20 of the photodetector diodes 2 and an input interface 22 of the readout unit cells 18 is achieved by bump bonding using indium bumps 24.

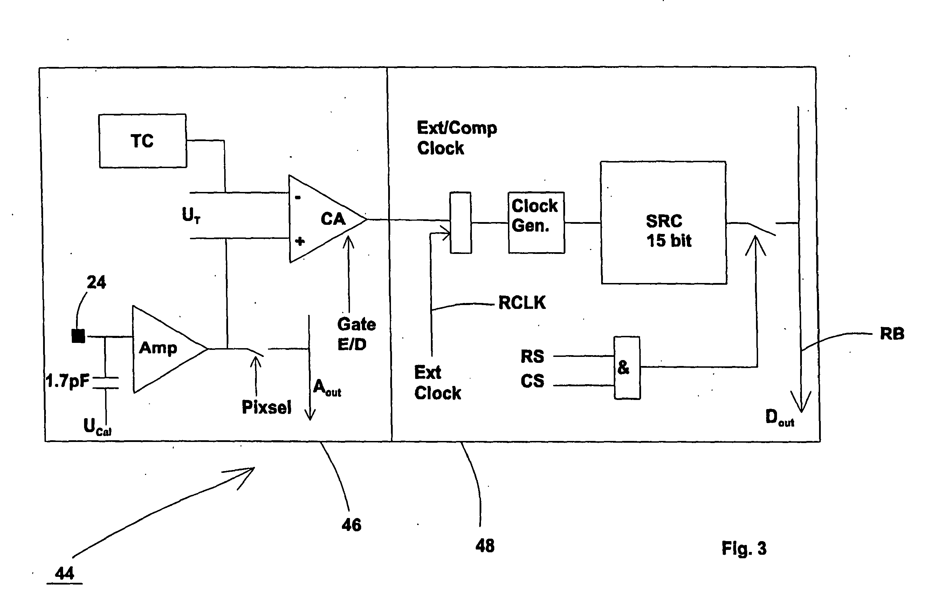

Figur 3 now depicts a schematic view on the electronic architecture of a readout unit cell circuitry 44 disposed in the eletronic circuitry layer 16 as capable for use with the two-dimensional pixel detector 14. The readout unit cell circuitry 44 can be divided into an analog block 46 and a digital block 48. The analog block 46 starts with the bump pad 24 (interface) connected to an input terminal of a charge sensitive amplifier Amp. For calibration purposes, a source of calibration voltage U_{Cal} is connected via a capacitor C to the input terminal of the amplifier Amp, too. The capacity of the capacitor has been chosen to a comparably tiny capacity of about only 1.7 fF allowing to be sensitive enough that the photo-electrons can change the voltage over the capacitor C to an extend that this difference can be significantly amplified by the amplifier Amp hereinafter referred to as first output voltage signal.

This first output voltage signal is led to one of the two input terminals of a comparator amplifier CA which is additionally connected to a source of a threshold voltage supply U_{T}. The other input terminal of the comparator amplifier CA is additionally connected to a source of threshold voltage correction supply TC. This source of threshold voltage correction supply TC allows to bias the input terminals of the comparator amplifier CA. According to the predetermined bias, of the input terminals of the comparator amplifier CA even the first output voltage signal from the CS amplifier Amp that represents a fractional part of the charge of the generated photo-electron hole pairs only can be further processed and is therefore not lost for the successive data processing and evaluating.

This electronic readout equipment 44 enables the detection of fractions of the full charge of the photo-electron hole pairs 10 generated by an incident particle and/or photon what may occur when the photo-electron hole pairs 10 are generated in the twilight zone located between two adjacent photodetector diodes 2.

As an example, the source of threshold voltage correction supply TC can be adjusted up to a level defined by one half of the full charge of the photo-electron hole pairs 10 generated in total by an incident x-ray photon 6. Consequentially, the distribution of the charge of the photo-electrons to adjacent photodetector diodes 2 can be further processed. A downstream data processing unit is now enabled to perform a differential evaluation of the digital output voltage signals of the comparators having its origin from the photo-electrons in adjacent photodetector diodes 2, whereby these photo-electrons have been generated by the same x-ray photon.

Downstream to the analog block 46 is the digital block 48 having generally the task to convert the digital output voltage signal into a digital counter signal that can be evaluated by a multiplexing means provided with a data processing means. Together with a enable/disenable switch E/D different clock means, i.e. an external clock RCLK from the data processing means control a clock generator CG for a digital counter unit SRC which itself is connected to a readout bus RB. The digital data stored in the digital block 48 of a distinct readout unit cell 18 can then be readout if a row select RS and column select CS are set high to set high an AND-gate & in order to select a predetermined pixel.

In a preferred embodiment, the fundamental unit of the pixel detector 14 is therefore the combined module, containing a single fully-depleted monolithic silicon sensor 80 x 36 mm² x 300 µm thick, bump-bonded to a 2 x 8 array of readout unit cells 14 using 17 µm diameter indium balls 22. The readout unit cells 18, fabricated on 15 cm wafers in the DMILL radiation tolerant CMOS process, can be arranged in a typical example in an embodiment giving 10 x 20 mm² of detector area containing a 44 x 78 array of 217 x 217 µm² pixels. This embodiment is realized in the electronic circuitry layer 16, in which the readunit unit cells 18 are embedded.

Due to the continuous conversion layer 4, the pixel detector/sensor is continuous, too, and has no dead area. Double-size pixels are used at the chip boundaries to span the gap between readout unit cells 18. The pixel detector 14 can be operated at room temperature. Alternatively, it can be water cooled because each module dissipates about 10 W.

As shown in Figur 3, each pixel contains a charge-sensitive preamplifier Amp and shaper (comparator CA), a discriminator, and a 15-bit pseudo-random counter SRC. Thus, the data are stored in digital form for each pixel. The amplifier noise is 75 e⁻, which permits single conversion electron counting. Each pixel is xy-addressable via a multiplexing means and comprises a 4-bit threshold trim adjustment. Two modes are defined: The counting mode, in which all pixels are individually counting the generated load of electron hole pairs; and the readout mode in which the stored data may be accessed.

The read out is performed serially at a clock frequency of 10 MHz, and leads to a readout time of 6.7 ms for each of the afore-mentioned sixteen chips each comprising 2 x 8 readout unit cells 14. Since all chips are read out in parallel, the readout time of the module is also 6.7 ms. The module control board carries the electronics needed to operate the 2 x 8 array and provide electrical isolation of all signals.

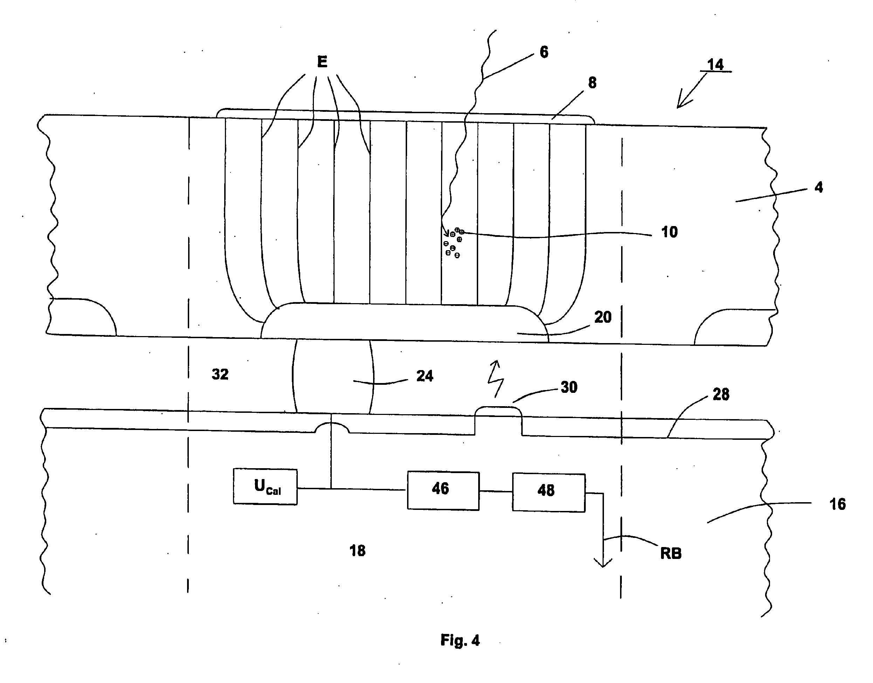

Nevertheless, for the purpose of testing the transfer of electric signal from the detector diode 2 via the bump bond 24 and then through the complete chain of the readout unit cell 18, the electronic circuitry layer 16 comprises a plurality of cell testing traces 28 (only one of those is shown in Figure 4). Preferably, for each readout unit cell 18 (or in other words, for each pixel) a cell testing traces 28 is provided in the electronic circuitry layer 16. The cell testing traces 28 is disposed in order to allow an electric AC signal to crosstalk into the diode output interface 20.

In one embodiment, the cell testing trace 28 may be diposed underneath the surface of the electronic circuitry layer 16. and may comprise a crosstalk section 30 which distinguishes over the other parts of the cell testing traces 28 insofar as to allow the crosstalk of the AC testing signal into the diode output interface 20. In another example, the cell testing traces 28 enlarge in the electronic circuitry layer 16 being aligned with an electric shielding except for the crosstalk section 30 that remains unshielded and, therefore, leads to the desired leakage/crosstalk properties. In another embodiment, the cell testing trace 28 is disposed deeper in the electronic circuitry layer 16 and only its crosstalk section 30 extends along the surface in alignment with the diode output interface 20 or a section thereof.

For testing a distinct pixel, the data processing means generates an AC cell testing signal that is directed via a suitable multiplexing means to the cell testing trace 28 of this distinct predetermined readout unit cell 18. The AC cell testing signal even flows through the crosstalk section 30 and is enabled by the design of the crosstalk section 30 to couple capacitively into the diode output interface 20. The crosstalk signal itself is amplified by the high gain low noise amplifier AMP in the analog part 46 of the readout unit cell 18. For the further signal processing applies the same as for a signal generated by the conversion of an incident particle and/or photon. Coincidental appearance of both the AC cell testing signal and the immediate response to this AC cell testing signal verifies the proper function of a readout unit cell 18 and its electric conjunction to the detector diode 2 via the indium bumps 24. The analog signal behind the amplifier Amp as seen in the direction of the signal/data flow can be checked by the selection of the respective pixel using the multiplexing means.

The frequency composition and/or the amplitude of the AC cell testing signal can be selected in a broad range depending on the design of at leat one of the gap 32 between the semiconductor layer 4 and the electronic circuitry layer 16. In this embodiment, the gap 32 is an air gap. In another embodiment, this gap 32 may be filled with a dielectric, such as a ceramic insulator.

Although a limited number of preferred embodiments of this invention has been disclosed, a worker of ordinary skill in this art would recognise that certain modifications would come within the scope of this invention. For that reason, the following claims should be studied to determine the true scope and content of this invention.

## Claims

1. A pixel detector (14) for particle and/or photon radiation (6), comprising:
a) a conversion layer (4) comprising a conversion material sensitive to said particle and/or photon radiation (6);
b) an NxM array of detector diodes (2) arranged in said conversion layer (4); each of said detector diodes (2) having a bias potential interface (8) and a diode output interface (20);
c) an electronic circuitry layer (16) comprising a NxM array of high gain, low noise readout unit cells (18), one readout unit cell (18) for each detector diode (2), and a plurality of circuit traces;
d) said plurality of circuit traces comprises a plurality of cell testing traces (28) for at least a part of said readout unit cells (18) ;
e) means for generating a testing signal and for directing this signal to the cell testing traces (28) of distinct predetermined readout unit cells (18); and
f) said cell testing traces (28) are disposed at least partially relative to the detector diodes (2) in order to allow a test signal on a distinct cell testing trace (28) to crosstalk into the respective detector diode (2).

2. The pixel detector (14) according to claim 1,
**characterized in that**
the cell testing traces (28) having a crosstalk section (30), each crosstalk section (30) is disposed at least partially on the surface of the electronic circuitry layer (16).

3. The pixel detector (14) according to claim 1 or 2,
**characterized in that**
said crosstalk section (30) is disposed at least partially opposite to said diode output interface (20).

4. The pixel detector (14) according to any one of the preceeding claims, **characterized in that**
said test signal is provided by a data processing means; said data processing means being connected via a multiplexer means to said array of readout unit cells (18) allowing to control each cell testing trace (28) of the respective readout unit cell (18).

5. The pixel detector (14) according to claim 4,
**characterized in that**
the data processing means control via the multiplexing means one or more of the following functions:
a) programming of the readout unit cell (18);
b) readout of the data in the readout unit cell (18);
c) calibration of the readout unit cell (18), preferably a high gain voltage amplifier means (Amp, CA);
d) analyzing the analog signal in the high gain voltage amplifier means (Amp, CA) for the purpose of diagnosis; and
e) setting a lower and/or an upper threshold to a threshold unit comprised in each readout unit cell (18).

6. The pixel detector (14) according to any one of the preceding claims, **characterized in that**
said conversion layer (4) is a semiconductor layer.

7. The pixel detector (14) according to any one of the preceding claims, **characterized in that**
said crosstalk is achieved by capacitive coupling.

8. The pixel detector (14) according to claim 7,
**characterized in that**
an air gap (32) is disposed between said crosstalk section (30) of the cell testing traces (28) and the detector diode (2), preferably the diode output interface (20) of the detector diode (2).

9. A method for testing a pixel detector (14) having a plurality of detector diodes (2) disposed in a conversion layer (4) and a plurality of readout unit cells (18) disposed in an electronic circuitry layer (16), comprising:
a) generating a cell testing signal;
b) forwarding said cell testing signal to a cell testing trace (28) disposed in said electronic circuitry layer (16) ;
c) allowing a crosstalk of the cell testing signal into the respective detector diode (2) in order generate a crosstalk signal;
d) amplifying the crosstalk signal gained from the respective detector diode (2) in said readout unit cell (18) ; and
e) evaluating the amplyfied crosstalk signal in response to the cell testing signal.

## Patentansprüche

1. Pixeldetektor (14) für Teilchen- und/oder Photonenstrahlung (6), welcher umfasst:
a) eine Konversionsschicht (4), die ein Konversionsmaterial umfasst, das gegenüber der besagten Teilchen- und/oder Photonenstrahlung (6) empfindlich ist;
b) ein NxM-Array aus Detektordioden (2), das in der besagten Konversionsschicht (4) angeordnet ist; wobei jede der besagten Detektordioden (2) eine Vorspannungspotential-Schnittstelle (8) und eine Diodenausgangs-Schnittstelle (20) aufweist;
c) eine elektronische Schaltungsschicht (16), die ein NxM-Array aus rauscharmen Ausleseeinheit-Zellen (18) mit hohem Gewinn umfasst, wobei je eine Ausleseeinheit-Zelle (18) für jede Detektordiode (2) vorgesehen ist, und eine Vielzahl von Schaltungsbahnen;
d) wobei die besagte Vielzahl von Schaltungsbahnen eine Vielzahl von Zellentestbahnen (28) für wenigstens einen Teil der besagten Ausleseeinheit-Zellen (18) umfasst;
e) Mittel zum Erzeugen eines Testsignals und zum Leiten dieses Signals zu den Zellentestbahnen (28) unterschiedlicher vorbestimmter Ausleseeinheit-Zellen (18) ; und
f) wobei die besagten Zellentestbahnen (28) wenigstens teilweise bezüglich der Detektordioden (2) so angeordnet sind, dass sie es ermöglichen, dass durch ein Testsignal auf einer bestimmten Zellentestbahn (28) ein Übersprechen (Crosstalk) in die jeweilige Detektordiode (2) erfolgt.

2. Pixeldetektor (14) nach Anspruch 1, **dadurch gekennzeichnet, dass**
die Zellentestbahnen (28) einen Übersprechabschnitt (30) aufweisen, wobei jeder Übersprechabschnitt (30) wenigstens teilweise auf der Oberfläche der elektronischen Schaltungsschicht (16) angeordnet ist.

3. Pixeldetektor (14) nach Anspruch 1 oder 2, **dadurch gekennzeichnet, dass**
der besagte Übersprechabschnitt (30) wenigstens teilweise gegenüber der besagten Diodenausgangs-Schnittstelle (20) angeordnet ist.

4. Pixeldetektor (14) nach einem der vorhergehenden Ansprüche, **dadurch gekennzeichnet, dass**
das besagte Testsignal durch ein Datenverarbeitungsmittel bereitgestellt wird; wobei das besagte Datenverarbeitungsmittel über ein Multiplexermittel mit dem besagten Array von Ausleseeinheit-Zellen (18) verbunden ist, das es ermöglicht, jede Zellentestbahn (28) der entsprechenden Ausleseeinheit-Zelle (18) anzusteuern.

5. Pixeldetektor (14) nach Anspruch 4, **dadurch gekennzeichnet, dass**
das Datenverarbeitungsmittel über das Multiplexermittel eine oder mehrere der folgenden Funktionen steuert:
a) Programmieren der Ausleseeinheit-Zelle (18);
b) Auslesen der Daten in der Ausleseeinheit-Zelle (18);
c) Kalibrieren der Ausleseeinheit-Zelle (18), vorzugsweise eines Spannungsverstärkermittels mit hohem Gewinn (Amp, CA);
d) Analysieren des Analogsignals in dem Spannungsverstärkermittel mit hohem Gewinn (Amp, CA) für die Zwecke der Diagnose; und
e) Einstellen eines unteren und/oder eines oberen Schwellenwertes für eine in jeder Ausleseeinheit-Zelle (18) enthaltene Schwellenwerteinheit.

6. Pixeldetektor (14) nach einem der vorhergehenden Ansprüche, **dadurch gekennzeichnet, dass**
die besagte Konversionsschicht (4) eine Halbleiterschicht ist.

7. Pixeldetektor (14) nach einem der vorhergehenden Ansprüche, **dadurch gekennzeichnet, dass**
das besagte Übersprechen durch kapazitive Kopplung erreicht wird.

8. Pixeldetektor (14) nach Anspruch 7, **dadurch gekennzeichnet, dass**
ein Luftspalt (32) zwischen dem besagten Übersprechabschnitt (30) der Zellentestbahnen (28) und der Detektordiode (2), vorzugsweise der Diodenausgangs-Schnittstelle (20) der Detektordiode (2), angeordnet ist.

9. Verfahren zum Prüfen eines Pixeldetektors (14), der eine Vielzahl von in einer Konversionsschicht (4) angeordneten Detektordioden (2) und eine Vielzahl von in einer elektronischen Schaltungsschicht (16) angeordneten Ausleseeinheit-Zellen (18) aufweist, welches umfasst:
a) Erzeugen eines Zellentestsignals;
b) Weiterleiten des besagten Zellentestsignals zu einer Zellentestbahn (28), die in der besagten elektronischen Schaltungsschicht (16) angeordnet ist;
c) Ermöglichen eines Übersprechens des Zellentestsignals in die jeweilige Detektordiode (2), um ein Übersprechsignal zu erzeugen;
d) Verstärken des Übersprechsignals, das von der jeweiligen Detektordiode (2) gewonnen wurde, in der besagten Ausleseeinheit-Zelle (18); und
e) Auswerten des verstärkten Übersprechsignals in Reaktion auf das Zellentestsignal.

## Revendications

1. Détecteur ( 14 ) de pixel pour une particule et/ou un rayonnement ( 6 ) de photon, comprenant :
a) une couche ( 4 ) de conversion comprenant une matière de conversion sensible à la particule et/ou au rayonnement ( 6 ) de photon ;
b) une matrice NxM de diodes ( 2 ) formant détecteurs disposée dans la couche ( 4 ) de conversion ; chacune des diodes ( 2 ) formant détecteurs ayant une interface ( 8 ) de potentiel de polarisation et une interface ( 20 ) de sortie de diode ;
c) une couche ( 16 ) de circuit électronique comprenant une matrice NxM de cellules ( 18 ) unitaires de lecture à grand gain et à faible bruit, une cellule ( 18 ) unitaire de lecture pour chaque diode ( 2 ) formant détecteur et une pluralité de pistes de circuit ;
d) la pluralité de pistes de circuit comprend une pluralité de pistes ( 28 ) de test de cellule pour au moins une partie des cellules ( 18 ) unitaires de lecture ;
e) des moyens de production d'un signal de test et d'envoi de ce signal aux pistes ( 28 ) de test de cellules ( 18 ) unitaires de lecture distinctes déterminées à l'avance ;
f) les pistes ( 28 ) de test de cellule sont disposées, au moins en partie, par rapport aux diodes ( 2 ) formant détecteurs, de manière à permettre à un signal de test sur une piste ( 18 ) distincte de test de cellule de venir en diaphonie dans la diode ( 2 ) respective formant détecteur.

2. Détecteur ( 14 ) de pixel suivant la revendication 1, **caractérisé en ce que**
les pistes ( 28 ) de test de cellule ayant une section ( 30 ) de diaphonie, chaque section ( 30 ) de diaphonie est disposée, au moins en partie, à la surface de la couche ( 16 ) de circuit électronique.

3. Détecteur ( 14 ) de pixel suivant la revendication 1 ou 2, **caractérisé en ce que**
la section ( 30 ) de diaphonie est disposée, au moins en partie, à l'opposé de l'interface ( 20 ) de sortie de la diode.

4. Détecteur ( 14 ) de pixel suivant l'une quelconque des revendications précédentes, **caractérisé en ce que**
le signal de test est fourni par un moyen de traitement de données ; le moyen de traitement de données étant relié par un moyen de multiplexeur à la matrice de cellules ( 18 ) unitaires de lecture en permettant de commander chaque piste ( 28 ) de test de cellule de la cellule ( 18 ) unitaires de lecture respective.

5. Détecteur ( 14 ) de pixel suivant la revendication 4, **caractérisé en ce que**
les moyens de traitement de données commandent, par l'intermédiaire des moyens de multiplexage, une ou plusieurs des fonctions suivantes :
a) programmation de la cellule ( 18 ) unitaire de lecture ;
b) lecture des données dans la cellule ( 18 ) unitaire de lecture ;
c) étalonnage de la cellule ( 18 ) unitaire de lecture, de préférence un moyen ( Amp, CA ) amplificateur de tension à grand gain ;
d) analyse du signal analogique dans le moyen ( Amp, CA ) amplificateur de tension à grand gain à des fins de diagnostic ; et
e) fixation d'un seuil inférieur et/ou d'un seuil supérieur d'une unité de seuil comprise dans chaque cellule ( 18 ) unitaire de lecture.

6. Détecteur ( 14 ) de pixel suivant l'une quelconque des revendications précédentes, **caractérisé en ce que** la couche ( 4 ) de conversion est une couche semiconductrice.

7. Détecteur ( 14 ) de pixel suivant l'une quelconque des revendications précédentes, **caractérisé en ce que** la diaphonie est obtenue par couplage capacitif.

8. Détecteur ( 14 ) de pixel suivant la revendication 7, **caractérisé en ce que**
un intervalle ( 32 ) d'air est disposé entre la section ( 30 ) de diaphonie des pistes ( 28 ) de test de cellule et la diode ( 2 ) formant détecteur, de préférence l'interface ( 20 ) de sortie de la diode ( 2 ) formant détecteur.

9. Procédé de test d'un détecteur ( 14 ) de pixel ayant une pluralité de diodes ( 2 ) formant détecteurs disposées dans une couche ( 4 ) de conversion et une pluralité de cellules ( 18 ) unitaires de lecture disposées dans une couche ( 16 ) de circuit électronique comprenant :
a) produire un signal de test de cellule ;
b) envoyer ce signal de test de cellule à une piste ( 28 ) de test de cellule disposée dans la couche ( 16 ) de circuit électronique ;
c) permettre une diaphonie du signal de test de cellule dans la diode ( 2 ) respective formant détecteur afin de produire un signal de diaphonie ;
d) amplifier le signal de diaphonie obtenu de la diode ( 2 ) respective formant détecteur dans la cellule ( 18 ) unitaire de lecture ; et
e) évaluer le signal amplifié de diaphonie en réaction au signal de test de cellule.
